(19) **Europäisches Patentamt / European Patent Office / Office européen des brevets**

(11) **EP 1 757 051 B1**

(12) **EUROPEAN PATENT SPECIFICATION**

(45) Date of publication and mention
of the grant of the patent:
**17.10.2007 Bulletin 2007/42**

(51) Int Cl.:
**H04L 25/02** (2006.01)    **H04L 5/02** (2006.01)

(21) Application number: **04764663.3**

(22) Date of filing: **31.08.2004**

(86) International application number:
**PCT/EP2004/009698**

(87) International publication number:
**WO 2006/024312 (09.03.2006 Gazette 2006/10)**

(54) **APPARATUS AND METHOD FOR ITERATIVELY ESTIMATING A CHANNEL TRANSFER FUNCTION**

VORRICHTUNG UND VERFAHREN ZUM ITERATIVEN SCHÄTZEN EINER KANALÜBERTRAGUNGSFUNKTION

APPAREIL ET PROCEDE POUR L'ESTIMATION ITERATIVE D'UNE FONCTION DE TRANSFERT DE CANAL

(84) Designated Contracting States:
**DE GB**

(43) Date of publication of application:
**28.02.2007 Bulletin 2007/09**

(73) Proprietor: **NTT DoCoMo, Inc.**
**Tokyo (JP)**

(72) Inventors:
• **AUER, Gunther**
  **80339 München (DE)**
• **SAND, Stephan**
  **82211 Herrsching (DE)**
• **RAULEFS, Ronald**
  **80538 München (DE)**

(74) Representative: **Zinkler, Franz et al**
**Schoppe, Zimmermann, Stöckeler & Zinkler**
**Postfach 246**
**82043 Pullach bei München (DE)**

(56) References cited:
• **KUHN V ED - INSTITUTE OF ELECTRICAL AND ELECTRONICS ENGINEERS: "Iterative interference cancellation and channel estimation for coded OFDM-CDMA" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 2465-2469, XP010642890 ISBN: 0-7803-7802-4 cited in the application**
• **ZEMEN T ET AL: "Iterative detection and channel estimation for MC-CDMA" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 May 2003 (2003-05-11), pages 3462-3466, XP010643089 ISBN: 0-7803-7802-4**
• **ATARASHI H ET AL: "ITERATIVE DECISION-DIRECTED PATH SEARCH AND CHANNEL ESTIMATION FOR MULTI-CARRIER/DS-CDMA BROADBAND PACKET WIRELESS ACCESS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 1 OF 3. CONF. 51, 15 May 2000 (2000-05-15), pages 420-424, XP000970653 ISBN: 0-7803-5719-1**
• **OHKUBO N ET AL: "Added pilot semi-blind iterative channel estimation for ofdm packet transmission" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 878-882, XP010678448 ISBN: 0-7803-7974-8**

**Description**

The present invention is in the field of telecommunications and, in particular, in the field of iterative channel estimation.

In order to estimate a channel transfer function, so-called pilot symbols can be transmitted. In a receiver, the channel transfer function can be estimated by combining the pilot symbols and the received versions thereof.

However, transmitting a number of pilot symbols for channel estimation is associated with a reduction of a an available bandwidth which can be exploited for information transmission. It is therefore of interest to reduce the number of pilot symbols to be transmitted for channel estimation. However, especially in the case of time varying channels, a reduced number of pilot symbols may not be sufficient for an accurate channel estimation so that, e.g. during a detection process using an erroneous estimate of the channel transfer function, an increased bit error rate may result.

In order to reduce an estimation error, iterative channel estimation can be performed. An iterative channel estimation scheme comprises the following steps: detecting a data sequence in a received sequence to obtain a first estimate of the data sequence, processing the data sequence, e.g. re-encoding and re-modulating the data sequence, to obtain an estimate of a transmit sequence as a pseudo pilot sequence, and combining the estimate of the transmit sequence with the received sequence to obtain a channel estimate to be used in a subsequent iteration step for obtaining a further estimate of the data sequence and so forth. However, for iterative channel estimation, an initial (coarse) estimate of the date sequence or an initial estimate of the channel is required. An initial channel estimate may be obtained in an initial channel estimation stage on the basis of initially transmitted pilot symbols.

In the initial channel estimation stage, we consider reference symbol aided channel estimation (RACE) by general filtering, smoothing, or interpolating between the reference symbols. This type of channel estimation can be split in two steps. Firstly, at the position of the reference symbols, the initial channel state information (CSI) estimate is computed by the method of least squares. Secondly, the initial estimates from the position of reference symbols are filtered, smoothed, or interpolated to obtain a complete estimate of the CSI (CSI = channel state information).

As an example of RACE, we consider pilot aided channel estimation (PACE) by Wiener filtering. This type of channel estimation (CE) is optimum in the mean square error (MSE) sense when the second order statistics of the channel are known perfectly. Since the correlation properties of the channel are in practice not known perfectly, a robust design can be chosen. This has the advantage that a set of filter coefficients can be pre-computed to reduce the complexity of the channel estimator in the receiver.

In the literature, ICE (ICE = iterative channel estimation) has been extensively studied for OFDM as disclosed in F. Sanzi and S. ten Brink, "Iterative channel estimation and decoding with product codes in multi-carrier systems," Boston, MA, USA, 2000. pp. 1338-1344, and CDMA in T.M. Schmidl, A.G. Dabak, and S. Hosur, "The use of iterative channel estimation (ICE) to improve link margin in wideband CDMA systems", in IEEE 49th Vehicular Technology Conference, 1999 (VTC 1999), and MC-CDMA in V. Kühn, "Iterative interference cancellation and channel estimation for coded OFDM-CDMA," Anchorage, Alaska, USA, May 2003, IEEE.

F. Sanzi, S. Jelting, and J. Speidel, "A comparative study of iterative channel estimators for mobile OFDM systems," IEEE Trans. Wireless Commun, pp. 849-859, Sept. 2003, and F. Sanzi, Kanalschatzverfahren für Mobilfunksysteme mit Mehrträgermodulation OFDM, Ph. D. thesis, Universität Stuttgart, 2003, consider ICE with a two step channel estimation in the initial and subsequent stages as described above for a multi-carrier system in the frequency domain. In this case, the OFDM system transmits on each sub-carrier a symbol taken from an M-ary phase shift keying (PSK) symbol alphabet. Since this alphabet does not contain a zero symbol, the two steps of CE by filtering P. Hoeher, S. Kaiser, and P. Robertson, "Pilot-symbol-aided channel estimation in time and frequency," in Proceedings IEEE GLORECOM, Phoenix, USA, Apr. 1997, Vol. 3, pp. 90-96, can be carried out straight forward. Moreover, F. Sanzi, Kanalschatzverfahren für Mobilfunksysteme mit Mehrträgermodulation OFDM, Ph.D. thesis, Universität Stuttgart, 2003, considers soft-decided symbols as reference symbols for the ICE, which can become zero for an M-ary quadrature amplitude modulation (QAM) symbol alphabet. To avoid a division by zero in the LS estimation, F. Sanzi, Kanalschätzverfahren für Mobilfunksysteme mit Mehrträgermodulation OFDM, Ph.D. thesis, Universitat Stuttgart, 2003, proposes to approximate the LS estimate by dividing the received reference symbol with the variance of the soft-decided symbol and multiplying it with the soft-decided symbol.

However, a MC-CDMA system (MC-CDMA = multicarrier code division multiplex access) being considered in the following by way of example only transmits M data symbols per user and per OFDM symbol in parallel, with each data symbol being spread with a WH (WH = Walsh-Hadamard) code of length L. Due to the superposition of sequences (spreaded sequences) being spreaded using e.g. WH codes, zero-valued subcarriers can occur. Consequently, these sub-carriers cannot be used to compute the LS estimates in the ICE.

The method proposed by F. Sanzi, Kanalschatzverfahren für Mobilfunksysteme mit Mehrtragermodulation OFDM, Ph.D. thesis, Universität Stuttgart, 2003 could be extended to an MC-CDMA system. However, this method has the following disadvantages. It is necessary to compute the variance and the value of each soft symbol used for ICE over all possible constellation points, i.e., $2^{MK}$ points, where $M$ is the number of bits per symbol and $K$ is the number of active users. This increases the complexity of the CE significantly. Due to the WH spreading, zero-valued subcarriers can occur with high probability. Hence, the variance can be nearly zero for the soft symbols. Furthermore, the approximation of the LS channel estimate then causes strong noise enhancement and degradation of the channel estimates. Moreover, the approximation is not valid for hard-decided symbols, but only for soft-decided symbols.

It is the object of the present invention to provide an efficient iterative channel estimation scheme with reduced complexity.

This object is achieved by an apparatus for iteratively estimating a channel transfer function of a communication channel according to claim 1 or by a receiver apparatus according to claim 19 or by a method for iteratively estimating a channel transfer function according to claim 20 or by a receiving method according to claim 21 or by a computer program according to claim 22.

The present invention is based on the finding that a division by zero can efficiently be avoided by comparing an amplitude of a value of an estimate of a transmit sequence to a threshold, the estimate of the transmit sequence to be used as a pseudo pilot (reference) sequence for further iteration. If the value is a real value, then the term "amplitude" refers to an absolute value. If the value is a complex value, then the term "amplitude" refers to an absolute value of the complex value or to an absolute value of the real- or imaginary part of the value.

If the amplitude of the value is below the threshold, then a predetermined value is provided as an estimate of the channel transfer function at a frequency point associated with the value of the estimate of the transmit sequence. The predetermined value may be, e.g. a value between zero to 10% of a non-zero value being obtained in a previous iteration step. Preferably, the predetermined value equals to zero.

In case the amplitude of the value of the transmit signal at the frequency point is greater than the threshold, then an estimate of the channel transfer function at the frequency point will be calculated using any known channel estimation scheme in frequency domain.

Therefore, the estimate of the channel transfer function may comprise zeroes at positions being associated with values of the estimate of the transmit sequence having an amplitude being smaller than (or equal to) the threshold. In order to obtain an estimate of the channel transfer function at the zero positions, interpolation can be performed. Moreover, the estimate of the channel transfer function may be filtered using e.g. a low-pass filter in order to obtain a smoothed estimate of the channel transfer function to be used e.g. in a subsequent detection process for detecting the data sequence in the estimate of the transmit sequence to obtain a further estimate of the data sequence and so forth.

The complexity reduction is due to the fact that, in the case of e.g. a zero sub-carrier resulting at a transmitter, the channel is not excited at the corresponding frequency point. Therefore, any estimate of the channel at the frequency point will be erroneous. Therefore, in accordance with the present invention, the complexity of the channel estimation scheme can be reduced and a stability of the estimation scheme can be increased when e.g. setting the estimates of the channel transfer function at not excited frequency points to zero. The same situation may appear when iteratively detecting the data sequence in the estimate of the transmit sequence. In certain detection stages, certain values of the estimate of the transmit sequence may be small due to e.g. estimation or decoding errors. Therefore, estimates of the channel transfer function obtained from such values may be erroneous, too. In accordance with the present invention, the coefficients of the channel transfer function associated with these frequency points will be set e.g. to zero so that, generally, a complexity reduction and stability increase can be achieved. Nevertheless, a reliable estimate of the channel transfer function at the frequency point being set to zero can be obtained by the means of e.g. filtering as has been described above.

Moreover, the inventive approach allows to further improve RACE for an MC-CDMA system (MC-CDMA = multicarrier code division multiplex access), since the inventive ICE can easily implemented, which employs filtering and needs only slight modification of RACE by filtering, smoothing, or interpolating. In the special case of PACE and with robust assumptions, merely a second set of filter coefficients needs to be pre-computed keeping the complexity of the channel estimator low.

Further embodiments of the present invention are described with respect to the following figures, in which:

Fig. 1     shows an apparatus for iteratively estimating a channel transfer function in accordance with an embodiment of the invention;

Fig. 2     shows a block diagram of an MC-CDMA system with iterative channel estimation in accordance with an embodiment of the present invention;

Fig. 3     shows a single user detector;

Fig. 4a     shows a block diagram of an interference cancellation analysis block;

Fig. 4b     shows a block diagram of an interference cancellation synthesis block;

Fig. 4c       shows a parallel interference canceller;

Fig. 5        shows constellation points of a sub-carrier with binary PCK symbol alphabets and spreading length equal to 8;

Fig. 6        shows a power delay profile of a channel model;

Fig. 7a       demonstrates a performance of the inventive approach;

Fig. 7b       shows a performance of the inventive approach; and

Fig. 8        shows system parameters.

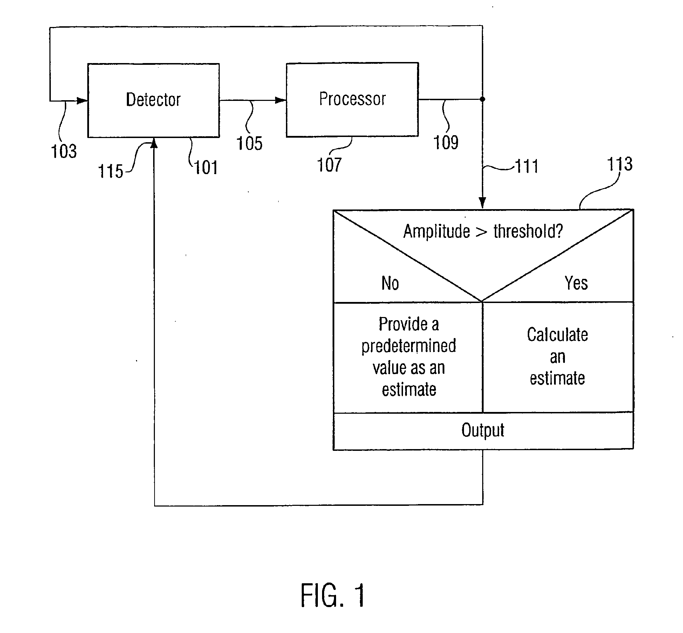

Fig. 1 shows a block diagram of an apparatus for iteratively estimating a channel transfer function of a communication channel extending between a transmitting point and receiving point from a spectrum of a received signal. The channel transfer function to be estimated corresponds to a spectrum of a channel impulse response of the communication channel. The spectrum of the communication channel may be obtained by e.g. time-frequency transforming channel impulse response into frequency domain e.g. by the means of Fourier transform.

According to the present invention, the channel transform function is iteratively estimated from a received signal being a receivable version of a transmit signal. More specifically, the channel transfer function is to be estimated from a spectrum of the received signal being a received version of the transmit signal, the transmit signal being transmitted through the communication channel. For example, the transmit signal is a time domain multi-carrier signal resulting from frequency-time transforming a transmit sequence using e. g an inverse Fourier transform, wherein the transmit sequence may result from processing a data sequence using a processing scheme.

The processing scheme may comprise all processing functionalities being necessary for processing a data sequence, which may be an information sequence, such that the transmit sequence is obtained. The processing scheme may comprise e.g. an encoding scheme, e.g. convolutional encoding or block encoding, interleaving, mapping (modulating) using e.g. a QAM scheme (QAM = Quadrature Amplitude Modulation), serial to parallel conversion to obtain a plurality of parallel streams, for each stream, a spreading scheme using e.g. Hadamard codes, parallel to serial conversion, further interleaving, and e.g. applying an OFDM modulation scheme (OFDM = Orthogonal Frequency Division Multiplexing), the OFDM scheme using an inverse Fourier transform for transforming the resulting transmit sequence in the time domain to obtain the transmit signal. Furthermore, the transmit sequence may comprise, at certain pilot positions, pilot symbols being inserted by the transmitter into a processed data sequence for channel estimation purposes.

In order to detect the data sequence, the apparatus shown in Fig. 1 comprises a detector 101 having an input 103 and an output 105, the output 105 being coupled to an input of a processor 107, the processor 107 having an output 109.

The output 109 of the processor 107 is coupled back to the input 103 of the detector 101. Furthermore, the output 109 of the processor 107 is coupled to an input 111 of a channel estimator 113, wherein an output of the channel estimator 113 is coupled to a further input 115 of the detector 101.

The detector 101 is configured for obtaining an estimate of the data sequence from a version of a spectrum of the received signal, wherein the spectrum of the received signal is e.g. a Fourier transform of the time-domain received signal. The detector 101 is configured for receiving a version of the spectrum of the received signal via the input 103, the version of the spectrum of the received signal resulting from processing the estimate of the data sequence by the processor 107, the processor 107 being configured for providing the version of the spectrum of the received signal via the output 109.

In a first iteration step, the version of a spectrum of the received signal being provided to the detector 101 may be the original spectrum of the received signal. However, during iteration, different (processed) versions of the spectrum of the received signal are obtained, so that the detector is configured for estimating the data sequence from a different version of the spectrum of the received signal.

The detector 101 can be any detector being capable for detecting a data sequence in an input sequence. The detector may be configured for performing hard decision operations or for performing soft decision operations, for equalizing, or for decoding etc.

The processor 107 is configured for receiving the estimate of the data sequence provided by the detector 101 and for processing the estimate of the data sequence to obtain an estimate of the transmit sequence using the processing scheme. In other words, the processor 107 is configured for emulating the processing scheme being performed in the transmitter in order to obtain the estimate of the transmit sequence. In accordance with an iterative channel estimation scheme, the estimate of the transmit sequence is considered as a pseudo reference sequence to be exploited for channel estimation in a further iteration.

The estimate of the transmit sequence, representing a current pseudo pilot sequence, is provided to the detector 113 for channel estimation. In order to obtain an updated estimate of the channel transfer function, the detector 113 may combine the estimate of the transmit sequence representing a version of the spectrum of the received signal with the spectrum of the received signal, i.e. with the original spectrum of the received signal, to obtain an estimate or a further estimate of the channel transfer function.

Under the assumption that the estimate of the transmit sequence being provided by the processor 109 is, after each iteration step, closer to the transmit sequence being originally transmitted by the transmitter, the estimate of the channel transfer function has, after each iteration step, a reduced estimation error.

If the channel transfer function is to be estimated in frequency domain, then the spectrum of the received signal comprising the channel information at a certain frequency point may be divided by the estimate of the transmit sequence at the certain frequency point in order to obtain an estimate of the channel transfer function at the certain frequency point. However, the estimate of the transmit sequence at the certain frequency point may have an amplitude being e.g. zero or close to zero. This case may occur in the case of multi-carrier CDMA transmission where, in frequency domain, e.g. $K$ streams are superimposed to obtain a composed stream, wherein each of the $K$ streams represent a spreaded sequence. In this case, the superposition of the K streams may lead to an interference causing the resulting composite stream to be almost zero. In addition, the amplitude of the estimate of the transmit sequence at the certain frequency point may be close to zero only in a current iteration step and significantly exceed zero in a further iteration step. This is due to detecting the data sequence from the previous estimate of the transmit sequence and reprocessing the data sequence using the processing scheme where, e.g., re-encoding, re-modulating and re-spreading can be applied. Since the result of the detecting and processing depends on a quality of the previous estimate of the transmit sequence and on the estimate of the data sequence, the detection process is dynamic so that a zero estimate obtained in a certain iteration step may be different from zero in a further iteration step.

However, dividing by zero or by a very small value is associated with problems mentioned above, e.g. with instability and increased estimation error.

The inventive channel estimator 113 is configured for estimating the channel transfer function using the estimate of the transmit sequence provided by the processor 107 and the spectrum of the received signal in order to obtain an estimate of the channel transfer function, wherein the channel estimator is configured for providing a predetermined value as an estimate of the channel transfer function at a frequency point when an amplitude of a value of the estimate of the transmit sequence is below a threshold, or for combining the value of the estimate of the transmit sequence at the frequency point with a value of the spectrum of the received signal at the frequency point to obtain an estimate of the channel transfer function when the amplitude of the value of the estimate of the transmit sequence at the frequency point is above the threshold, as also is depicted in Fig. 1.

In other words, the channel estimator 113 is configured for estimating the channel transfer function or for providing the predetermined value for an estimate of the channel transfer function at the frequency point in dependence of the amplitude of a value of the estimate of the transmit sequence at the frequency point.

In accordance with an aspect of the present invention, the predetermined value may be in a range between 0 and 10 % the previous estimate of the channel transfer function at the frequency point. Moreover, the predetermined value may correspond to the estimate of the channel transfer function at the frequency point being obtained in a previous iteration.

In accordance with the present invention, the threshold, to which an amplitude of a value of the estimate of the transmit sequence is to be compared, may freely be chosen, e.g. in dependence on a possible minimum value of the transmit sequence. For example, the values of the transmit sequence correspond to signal space constellation points belonging to e.g. a QAM scheme or to a 16 QAM scheme. In other words, the values of the transmit sequence may be complex wherein a magnitude of a value determines a radius in frequency domain. Therefore, the estimate of the transmit sequence is complex valued, too.

The threshold may be a value being determined by a smallest amplitude being associated with a mapping scheme, e.g. QAM, being used as the transmitter. For example, the threshold is 10 % a minimum absolute value, e.g. 10 % of a minimum radius in the signal space domain being associated with the mapping scheme.

In accordance with the present invention, channel estimator 113 may be configured for separately comparing an amplitude of a real part of the value of the estimate of the transmit sequence to the threshold, and/or for comparing an amplitude of an imaginary part of the value of the estimate of the transmit sequence to a threshold, wherein the threshold to be chosen for the real part may be different from the threshold to be chosen for the imaginary part.

In accordance with a further aspect of the present invention, the channel estimator 113 may be configured for comparing an absolute value as an amplitude of the value of the estimate of the transmit sequence to the threshold. In other words, the channel estimator 113 may be configured for determining, for each value of the estimate of the channel transfer function, a magnitude, i.e. the absolute value, and for comparing the calculated magnitude to the threshold.

In accordance with the present invention, the channel estimator may be configured for analyzing each value of the estimate of the transmit sequence in order to calculate the estimate of the channel transfer function by combining the value of the estimate of the transmit sequence and a corresponding value of the spectrum of the received sequence to obtain an estimate of the channel transfer function at the position associated with e.g. the value of the estimate of the transmit sequence, wherein the estimate of the channel transfer function is to be used for further iteration, in which the detector 101 may be configured for obtaining a further estimate of the data sequence from the estimate of the transmit sequence for further iteration to obtain a further estimate of the channel transfer function and so forth.

For example, the processor 107 is configured for processing the further estimate of the data sequence to obtain a further estimate of the transmit sequence as a version of the spectrum of the received signal being obtained in a current iteration step. The channel estimator 113 may be configured for receiving the further estimate of the transmit sequence and for estimating the channel transfer function using the further estimate of the transmit sequence in order to obtain the estimate of the channel transfer function or a further estimate of the channel transfer function and so forth.

In order to estimate the channel transfer function, the detector 113 may be configured for performing a least squares estimation or a minimum mean square error estimation in frequency domain.

For example, the channel estimator 113 may be configured for dividing a value of the spectrum of the received sequence by a value of the estimate of the transmit sequence, or for multiplying the value of the spectrum of the received sequence by a complex conjugated version of the value of the estimate of the transmit sequence for performing the least squares estimation in order to obtain an estimate of the channel transfer function at a position being associated with the combined values.

In accordance with the present invention, the channel transfer function may comprise coefficients being associated with different frequency points. In other words, the estimate of the channel transfer function provides a characteristic of the channel transfer function over frequency at a certain time instant. However, the estimate of the channel transfer function may be associated with a channel characteristic for a certain frequency point over time. generally, the coefficients of the estimate of the channel transfer function may be associated with the same frequency point and with different time instants in order to take time varying channel conditions into account. Correspondingly, the estimate of the channel transfer function may comprise a variation of a frequency characteristic of the channel over time.

For example, the spectrum of the received signal may comprise a set of spectral values, each spectral value in the set of spectral values being received at a different time instant at the same frequency point. The channel estimator 113 may be configured for estimating the channel transfer function at the frequency point for different time instant using the channel estimation scheme.

Moreover, the spectrum of the received signal may comprise a set of sub-carrier values, each sub-carrier value being associated with a different frequency point and each sub-carrier value being received at the same time instant. The channel estimator 113 may be configured in this case for estimating the channel transfer function at different frequency points.

In accordance with the present invention, the channel transfer function is iteratively determined using the inventive channel estimation scheme. However, an initial value for an estimate of the data sequence may be required. In order to obtain an initial estimate of the data sequence, an initial estimate of the channel transfer function may be necessary.

The initial estimate of the channel transfer function may be obtained by performing a pilot symbol aided estimation scheme at the time instants at which pilot symbols for channel estimation are available. The transmitter may be configured for transmitting pilot symbols only at certain time instants and for inserting pilot symbols into a processed data sequence in order to transmit pilot symbols at certain positions of the resulting transmit sequence. For example, the transmitter may be configured for inserting a pilot symbol at certain pilot positions of the transmit sequence, wherein the pilot positions may be associated with different frequency points or with different time instants.

If pilot symbols are transmitted, then the spectrum of the received signal comprises a set of received values, comprising received versions of pilot symbols at pilot positions, the pilot symbols being transmitted by the transmitter for channel estimation. For example, the values in the set of values being located between the pilot symbols may correspond to values of the processed data sequence, resulting from processing the data sequence using a processing scheme.

Based on pilot symbols, the channel estimator 113 may be configured for estimating the channel transfer function at pilot positions using the pilot symbols and the received versions of the pilot symbols since originally transmitted pilot symbols are usually known in a receiver and can therefore be exploited for channel estimation.

If the pilot symbol positions are spaced apart by a number of values at intermediate positions, i.e. if the set of received values comprises data values at intermediate positions between the received versions of the pilot symbols, then the channel estimator 113 may be configured for estimating the channel transfer function at the intermediate positions by interpolating between the estimates of the channel transfer function at the pilot positions. In other words, the channel estimator 113 is configured for estimating the channel transfer function at e.g. frequency points or time instants at which pilot symbols are available, and to use the coefficients of the estimate of the channel transfer function at these positions as supporting points for filtering or interpolating in order to obtain the coefficients of the estimate of the channel transfer function at intermediate positions.

For example, the channel estimator may be configured for inserting zeroes at the intermediate positions to obtain a zero-padded estimate of the channel transfer function and for filtering the zero-padded estimate of the channel transfer function to obtain an estimate of the channel transfer function.

Moreover, the channel estimator 113 may be configured for inserting zeroes at positions being associated with transmitted data being not accessible by the inventive channel estimator 113. This case may occur for example in a multi-user scenario, where the inventive channel estimator 113 is assigned to estimating the channel transfer function for a certain user. In this case, e.g. channel transfer function coefficients at frequency points assigned to the other users are also set to zero.

Moreover, the inventive channel estimator 113 may also be configured for extrapolating in order to obtain extrapolated coefficients of the estimate of the channel transfer function. The extrapolation can also be performed by the means of filtering.

Generally, the channel estimator 113 may be configured for filtering the estimate of the channel transfer function in order to obtain a smoothed estimate of the channel transfer function, and to provide the smoothed estimate of the channel transfer function as the estimate of the channel transfer function to the detector 115 for further iteration. For example, the channel estimator 113 may be configured for low-pass filtering the estimate of the channel transfer function in order to smooth the estimate of the channel transfer function being obtained by e.g. inserting zeroes at certain positions.

For example, the channel estimator may be configured for Wiener filtering the estimate of the channel transfer function to obtain a Wiener filtered estimate of the channel transfer function as the estimate of the channel transfer function to be provided to the detector for detecting purposes.

As has been mentioned above, the inventive apparatus for iteratively estimating the channel transfer function is configured for estimating the channel transfer function in frequency domain by exploiting the spectrum of the received signal and a currently obtained version thereof. In accordance with an aspect of the present invention, the inventive apparatus for iteratively estimating the channel transfer function may be a part of a receive apparatus, the receive apparatus comprising a time-frequency transformer, e.g. a Fourier transformer, being configured for transforming the received signal into frequency domain in order to obtain the spectrum of the received signal.

However, the inventive apparatus may further comprise a time-frequency transformer, e.g. a Fourier transformer, for time-frequency transforming the received signal to obtain the spectrum of the received signal.

In accordance with an aspect of the present invention, the apparatus for iteratively estimating the channel transfer function may comprise a storage element for storing the spectrum of the received signal to be used for iterations. For example, the storage element may be a part of the channel estimator 113.

In order to obtain an estimate of the data sequence from the estimate of the transmit sequence, the detector 101 may be configured for equalizing the estimate of the transmit signal, i.e. the version of the spectrum of the received signal, using the estimate of the channel transfer function to obtain an equalized sequence having reduced channel influence and for detecting the data sequence in the equalized sequence to obtain the estimate of the data sequence.

For example, the detector is configured for frequency domain equalizing the version of the spectrum of the received signal, according to frequency domain equalization being used in multi-carrier systems.

The present invention further provides a receiver apparatus comprising a demodulator for demodulating an input signal to obtain the received signal, a time-frequency transformer for time-frequency transforming the received signal to obtain the spectrum of the received signal and the apparatus for iteratively estimating channel transfer function according to the previous descriptions.

Moreover, the receive apparatus may comprise means for extracting information from the estimate of the data sequence being obtained for example after a last iteration step. For example, the means for extracting information may be configured for further processing the estimate of the data sequence in order to extract the information, for example by the means of source decoding etc.

In accordance with the present invention, the channel transfer function is iteratively estimated using the inventive estimation scheme, wherein a number of iterations may depend e.g. on a bit error ratio associated with detecting the data sequence in the estimate of the transmit sequence. For example, the decoder may be configured for performing a soft decoding scheme and to output soft values indicating the reliability of the estimate of the data sequence. The iteration may be stopped when the soft output values indicate e.g. an 80 % reliability of the estimated data sequence. For example, the detector may further control the channel estimator either for starting or for stopping the iterative channel estimation process. For example, 2-3 iteration steps are sufficient.

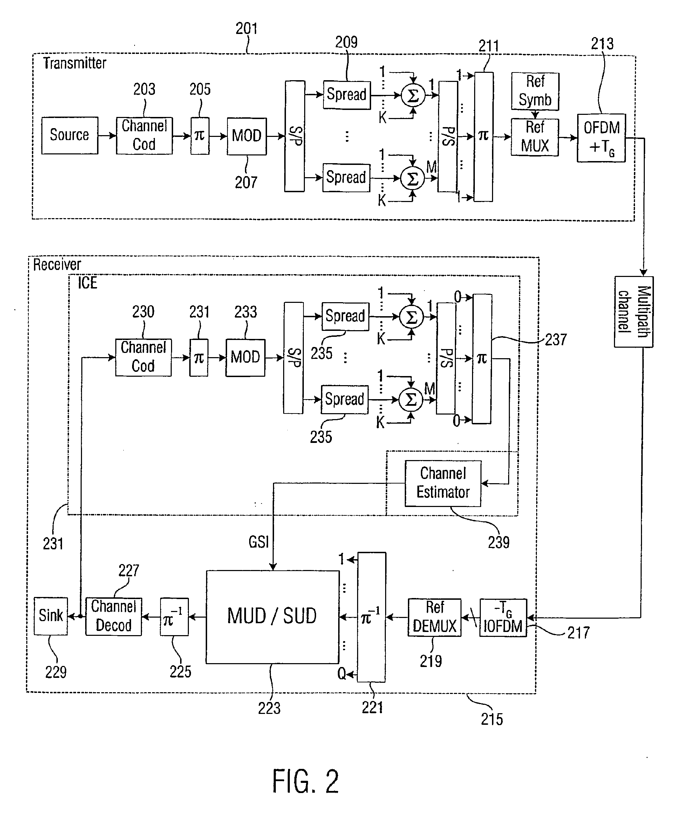

In the following, further embodiments of the present invention are described with respect to Figs. 2 to 8.

As has been mentioned above, e.g. the LS channel estimates are set to zero if the reconstructed sub-carrier is zero or below a certain threshold.

Then, the filtered channel estimates will not depend on the zero-valued subcarriers that would only cause noise enhancement and degrade the channel estimates. Furthermore, both soft- and hard-decided symbols can be used for ICE.

Furthermore, this novel MLS-estimate method with ICE is not limited to an MC-CDMA system with WH spreading codes, but can be applied to any other MC-CDMA, CDMA, or multi-carrier system with general spreading codes or symbol alphabet whose superposition or constellation yields values below a certain threshold.

In addition to considering the novel MLS-estimate method, we newly propose to extend the MLS-estimates to EG-estimates in the first step of RACE. Furthermore, we suggest to extend the MLS-estimates to MMSE-estimates in the first step of RACE. Thus, a division by zero can be completely avoided for a low signal-to-noise ratio (SNR). In the case of high SNRs again the novel MLS-estimate method can be applied.

Fig. 2 shows a block diagram of an MC-CDMA system with iterative channel estimation.

A transmitter 201 comprises a channel coder 203, an interleaver 205, a modulator 207, the channel coder, the interleaver, and the modulator being arranged in series. An output of the modulator is provided to a serial to parallel converter (S/P) being configured for providing M parallel streams. For each stream, the transmitter comprises a spreading element 209 being configured for spreading each data symbol with a Walsh-Hadamard code. Subsequently, the spreaded sequence is provided to a summation element being configured for superimposing $K$ spreaded sequences to obtain a composite, i.e. superimposed data stream. The $M$ composite data streams are provided to a parallel to serial converter so that a stream of Q streams results. The Q streams are interleaved using an interleaver 211 to obtain a processed sequence into which, by the way of example only, reference symbols are introduced by the means of multiplexing. The resulting transmit sequence is provided to an OFDM modulator 213 being configured for performing the OFDM modulation scheme including frequency-time transforming to obtain a transmit signal to be transmitted by the multi-path channel being indicated in Fig. 2.

The receiver apparatus 215 comprises an OFDM demodulator 217 being configured for performing an inverse OFDM modulation scheme. An output of the demodulator 217 is coupled to a de-multiplexer 219 being configured for de-multiplexing pilot symbols from the received sequence being provided by the demodulator 217, the received sequence being a frequency domain sequence. An output of the de-multiplexer is coupled to an inverse interleaver 221 being configured for performing a de-interleaving scheme being inverse to an interleaving scheme being performed by the interleaver 211 in the transmitter. The de-interleaver 221 has Q outputs, wherein, by the way of example only, an output of the Q outputs is coupled to a detector 223. The detector 223 may be a multi-user detector (MUD) or a single user detector (SUD). An output of the detector is coupled to a de-interleaver 225 corresponding to the interleaver 205, wherein an output of the de-interleaver 225 is coupled to a channel decoder 227 being configured for decoding the de-interleaved sequence to obtain an estimate of the data sequence. It is to be noted that the detector 223, the de-interleaver 225, and the channel decoder 227 can be considered as being part of the above-described decoder.

An output of the decoder is coupled to means 229 for extracting information and to an input of a channel coder 230, the channel coder 230 being a part of a processor 231, the channel coder 230 being configured for performing the same channel coding (encoding) scheme being performed by the channel coder 203.

The processor 231 is configured for performing the same processing scheme, which is performed by the transmitter. Therefore, the processor further comprises an interleaver 231 corresponding to the interleaver 205, a modulator 233 coupled to an output of the interleaver 231, the modulator 233 corresponding to the modulator 207, a serial to parallel converter, M spreading elements 235, M summation elements, a parallel to serial converter, and an interleaver 237 corresponding the interleaver 211.

In accordance with the present invention, the other inputs of the interleaver 237 are set to zero since the other streams being provided to the interleaver 211 in the transmitter are not accessible by the receiver.

The output of the interleaver 237 is coupled to an input of an estimator 239, the estimator 239 being configured for performing the inventive channel estimation scheme being described above. An output of the channel estimator 239 is coupled to a further input to the detector 223 in order to provide channel state information to the detector 223 for detecting purposes. Furthermore, the channel estimator has a further input to which an output of the de-multiplexer 219 is coupled in order to receive received versions of the pilot symbol for performing pilot symbol aided channel estimation as has been described above.

Fig. 2 represents a block diagram of an MC-CDMA system with ICE. At the transmitter side, there is a binary source for each of the $K$ users. The bits are encoded by a channel coder. Then, the code bits are interleaved by a code-bit interleaver. The modulator assigns the bits to complex-valued symbols according to different alphabets, e.g., M-ary PSK or M-ary QAM. A serial-to-parallel converter allocates the modulated signals to M data symbols per user in an OFDM symbol. Each of the M data symbols is spread with a Wash-Hadamard sequence of length $L$ ($L \geq K$). All modulated and spread signals are combined and form together one user group. $Q$ user groups are interleaved by a symbol interleaver and multiplexed together with reference symbols to one OFDM frame. Then, they are OFDM modulated and cyclically extended by the guard interval before they are transmitted over a multi-path channel. Additional white Gaussian noise is added.

The received symbols are shortened by the guard interval, OFDM demodulated, and the received reference symbols are separated from the received data symbols and fed into a single-input single-output channel estimator. In the initial stage of the ICE ($i = 0$), the channel estimator only uses the received reference symbols to estimate the channel state information.

After de-interleaving the received data symbols, the user group of interest is identified out of the $Q$ user groups and a multi-user detector (MUD) returns soft-coded bits of all users, which are de-interleaved and finally decoded using soft-decision algorithms. The decoded bits are then used to reconstruct the transmit signal, i.e., they are re-encoded, code-bit interleaved, modulated to the symbol alphabet, serial-to-parallel converted, spread, and combined together to form the user group signal. As we assume that the receiver possesses no knowledge of the other independent user groups, the reconstructed user group signal is multiplexed with zero symbols instead of data symbols from the other user groups and frequency interleaved.

In the i-th iteration of the ICE (i > 0), the channel estimator exploits the knowledge of both the received reference symbols and the reconstructed transmit signal to improve the accuracy of the CSI estimates. The newly obtained CSI estimates are then fed back to the MUD to improve the estimates of the transmitted bits. The above-described iterative detection and channel estimation can be repeated several times.

In the final stage of the iterative receiver, either a MUD or a single-user detector (SUD) returns soft-coded bits of the desired user, which are de-interleaved and finally decoded using soft-decision algorithms. At the sink, the bits are compared with the source bits and the errors are counted.

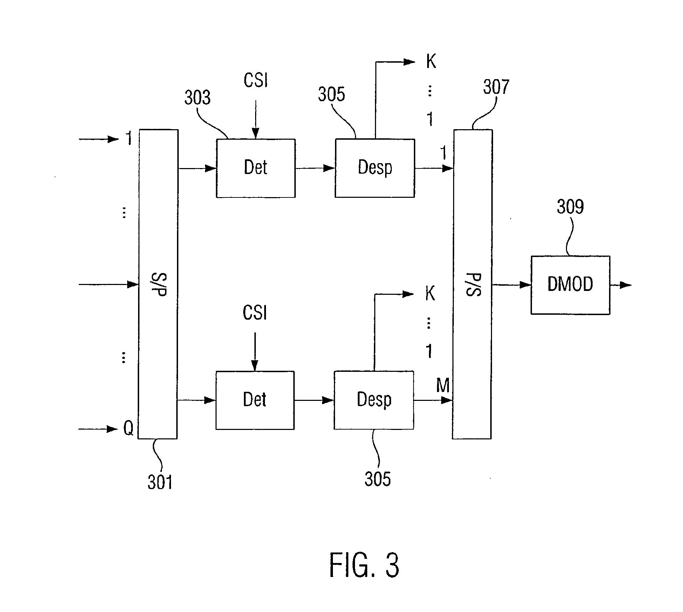

Fig. 3 shows a block diagram of a single user detector (SUD) comprising a serial to parallel converter 301 having Q inputs and M outputs. Each output is coupled to a detecting unit 303, the detecting unit 303 comprising e.g. an equalizer for equalizing the input signal using the channel state information. An output of the detecting unit 303 is coupled to an input of a de-spreading element 305 having $K$ outputs, wherein an output of the de-spreading unit 305 is coupled to an input of a parallel to serial (P/S) converter 307 having $N$ inputs. The parallel to serial converter 307 has an output coupled to a de-modulator 309 having an output.

The SUD obtains the signal of the user group of interest out of the $Q$ different user groups and detects the signal of the desired user. The equalized signal is de-spread. Then all data symbols of the desired user are combined to a serial data stream. The symbol demapper maps the data symbols into bits by computing the Log-Likelihood-ratio for each bit based on the selected symbol alphabet.

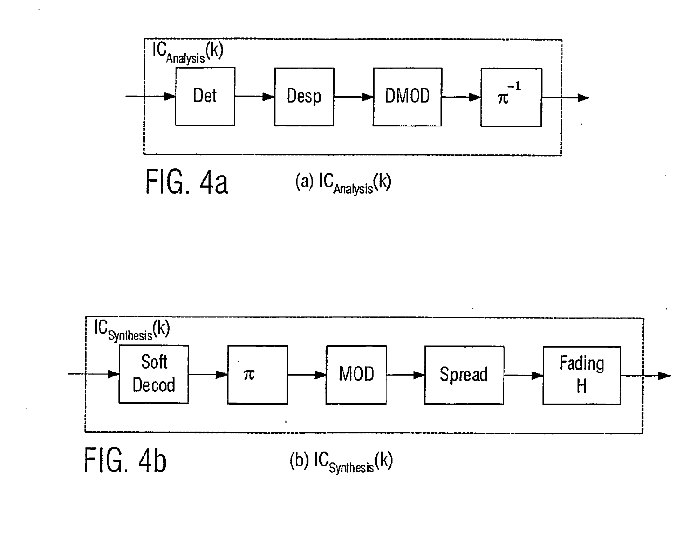

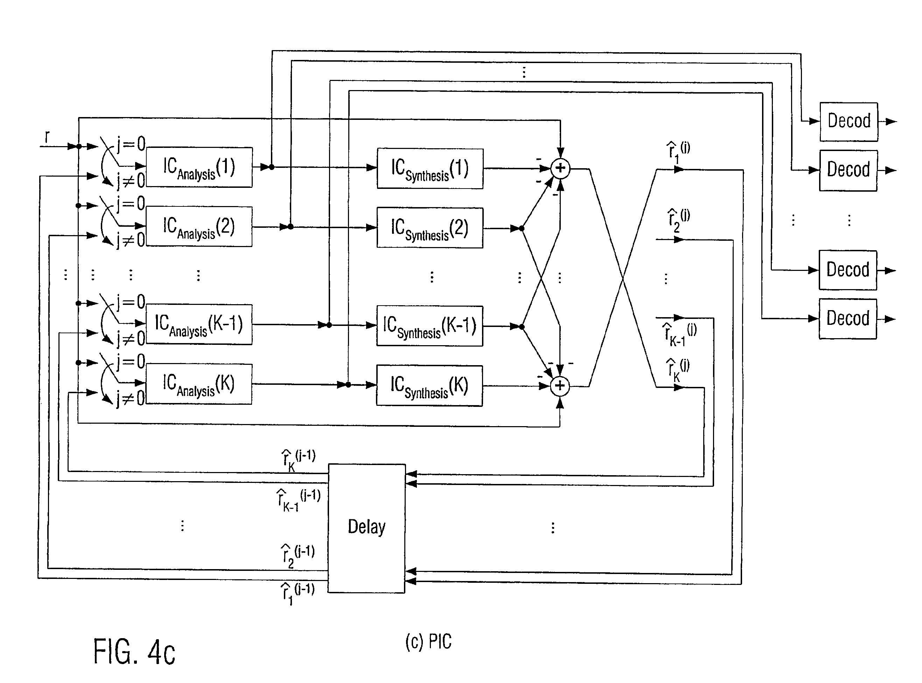

As an example for a MUD, consider the parallel interference canceller (PIC) depicted in Figs. 4a-4c. In the initial detection stage ($j = 0$), the data symbols of all $K$ active users are detected in parallel by the $K$ IC$_{Analysis}$ blocks and reconstructed by the $K$ IC$_{Synthesis}$ blocks. Each of the $K$ IC$_{Analysis}$, blocks first detects the signal of the desired user in Fig. 4a. Then the signal is de-spread, soft-demodulated, and finally deinterleaved. The subsequent IC$_{synthesis}$ block in Fig. 4b first decodes the soft-coded bits to soft bits S. Kaiser, Multi-Carrier CDMA Mobile Radio Systems - Analysis and Optimization of Detection, Ph.D. thesis, 1998. Then, the soft bits are re-interleaved and soft re-modulated. The obtained complex valued data symbols are spread with the user specific spreading code, and each chip is pre-distorted with the channel coefficient assigned to the sub-carrier where the chip is transmitted on.

After that, the total reconstructed multiple access interference (MAI) is subtracted from the received signal $r$, i.e., the interference from users 1, ... , $k$ - 1, $k$ + 1, ... , $K$ is subtracted from the received signal $r$ for user $k$. In the $j$-th iteration ($j > 0$), the $K$ interference reduced signals $\hat{r}_k^{(j-1)}$ are detected in parallel by the $K$ IC$_{Analysis}$ blocks, reconstructed by the subsequent $K$ IC$_{synthesis}$ blocks and the total reconstructed MAI is subtracted from the received signal $r$.

In the final detection stage, the interference cancelled signal of the $k$-th user is detected by the $k$-th IC$_{Analysis}$ block and finally soft decoded and hard decided to obtain the transmitted information bits from user $k$.

In the following, reference aided and iterative channel estimation will be addressed.

This section investigates how the reference symbol aided channel estimation (RACE) can be further improved by ICE if decided data symbols are used as additional reference symbols.

Many researchers have investigated decision directed channel estimation (DDCE) and ICE for spread spectrum and multi-carrier systems as disclosed (amongst others) in F. Sanzi and S. ten Brink, "Iterative channel estimation and decoding with product codes in multi-carrier systems," Boston, MA, USA, 2000. pp. 1338-1344, and in A. Haimovich, Y. Bar-Ness, and R. Manzo, "A stochastic gradient-based de-correlation algorithm with applications to multi-carrier CDMA," in IEEE 45th Vehicular Technology Conference, 1995, 1995, vol. 1, pages 464-468. However, they have not investigated ICE with a two step channel estimation in the initial and subsequent stages as described here for MC-CDMA with respect to Walsh-Hadamard spreading.

In the initial stage of the ICE, only received reference symbols are used to obtain the CSI according to F. Sanzi, Kanalschätzverfahren für Mobilfunksysteme mit Mehrträgermodulation OFDM, Ph.D. thesis, Universität Stuttgart, 2003, and S. Kaiser, Multi-Carrier CDMA Mobile Radio Systems - Analysis and Optimization of Detection, Ph.D. thesis, 1998, in two steps:

In a first step, the initial estimate $\breve{H}_{n',k'}$ of the channel transfer function at positions where reference symbols are located is obtained by dividing the received reference symbol $R_{n',k'}$ by the originally transmitted reference symbol $S_{n',k'}$, i.e.

$$\breve{H}_{n',k'} = \frac{R_{n',k'}}{S_{n',k'}}$$

$$= H_{n',k'} + \frac{N_{n',k'}}{S_{n',k'}} , \ \forall\{n', k'\} \in R \tag{1}$$

where $R$ denotes the set of reference symbol positions in an OFDM frame.

In a second step, the final estimates of the complete channel transfer function belonging to the desired OFDM frame are obtained from the initial estimates $\breve{H}_{n',k'}$ by a 2-D interpolation or filtering, respectively. The 2-D filtering is given by

$$\hat{H}_{n,k} = \sum_{\{n',k'\}\in\tau_{n,k}} \omega_{n',k',n,k}\breve{H}_{n',k'} , \ \tau_{n,k} \in R, \ n = 1, \ldots, N_c, \ k = 1, \ldots, N_s \tag{2}$$

where $\omega_{n',k',n,k}$ is the shift-variant 2-D impulse response of the filter. The subset $\tau_{n,k} \in R$ is the set of initial estimates $\breve{H}_{n',k'}$ that are actually used for estimation of $H_{n,k}$. The number of filter coefficients is

$$N_{tap} = \|\tau_{n,i}\| \le N_{grid} \tag{3}$$

and

$$N_{grid} = \|R\| \tag{4}.$$

As an example of a filter in Eq. 2 consider the 2-D Wiener filter. It is well known from the literature that the 2-D Wiener filter is the optimum solution to the filtering problem of Eq. 2 in the mean square error sense as disclosed in F. Sanzi, Kanalschätzverfahren für Mobilfunksysteme mit Mehrtragermodulation OFDM, Ph.D. thesis, Universität Stuttgart, 2003, i.e.

$$\omega_{n,k} = \phi^{-1}\theta_{n,k} \tag{5},$$

where the vector elements of $\theta_{n,k}$ and the matrix elements of $\phi$ are given by

$$\theta_{n-n',i-i'} = E\{H_{n,i}H^*_{n',i'}\} \tag{6}$$

$$\phi_{n'-n'',i'-i''} = \theta_{n'-n'',i'-i''} + \frac{\sigma^2}{E\left\{|S_{n',i'}|^2\right\}} \delta_{n'-n'',i'-i''} \qquad (7)$$

with $\sigma^2$, $E\{|S_{n',i}|^2\}$, $\delta_{n'-n'',i'-i''}$ being the average noise variance, the mean reference symbol energy, and the Kronecker delta function, respectively.

The estimated CSI is then used in the subsequent MUD, code-bit de-interleaver, and decoder to obtain an initial estimate of the transmitted information bits. After reconstructing the transmitted signal from the estimated information bits, the estimated data symbols and the transmitted reference symbols form the set $R_{ICE}$ of reference symbols known at the receiver.

For ICE with one or more iterations, the following steps have to be executed in each iteration:

1) Reconstruct the transmit signal from the estimate of the transmitted information bits.

2) Calculate the LS estimates in Eq. 1 for all reference symbols in $R_{ICE}$ in accordance with the RACE in the initial stage of the ICE as disclosed in F. Sanzi, S. Jelting, and J. Speidel, "A comparative study of iterative channel estimators for mobile OFDM systems," IEEE Trans. Wireless Commun, pages 849-859, Sept. 2003.

3) Obtain the final estimate of the channel transfer function through filtering the LS estimates over the set $R_{ICE}$ of all reference symbols as disclosed in F. Sanzi, S. Jelting, and J. Speidel, "A comparative study of iterative channel estimators for mobile OFDM systems," IEEE Trans. Wireless Commun, pages 849-859, Sept. 2003.

4) Use the newly estimated CSI in the subsequent MUD, code-bit de-interleaver, and decoder to obtain a new estimate of the transmitted information bits.

In the following, the LS estimate in Eq. 1 is investigated in detail for ICE. In an OFDM system with M-ary QAM or M-PSK modulation, a sub-carrier containing data symbols cannot be equal to zero. Therefore, it is always possible to compute the LS estimates in Eq. 1 in the ICE for hard-decided symbols. In addition, F. Sanzi, Kanalschätzverfahren für Mobilfunksysteme mit Mehrträgermodulation OFDM, Ph.D. thesis, Universität Stuttgart, 2003, considers soft-decided symbols as reference symbols for the ICE, which can become zero for an M-ary QAM symbol alphabet. To avoid a division by zero in the LS estimation, F. Sanzi, Kanalschätzverfahren für Mobilfunksysteme mit Mehrträgermodulation OFDM, Ph.D. thesis, Universität Stuttgart, 2003, proposes to approximate the LS estimate by dividing the received reference symbol with the variance of the soft-decided symbol and multiplying it with the soft-decided symbol.

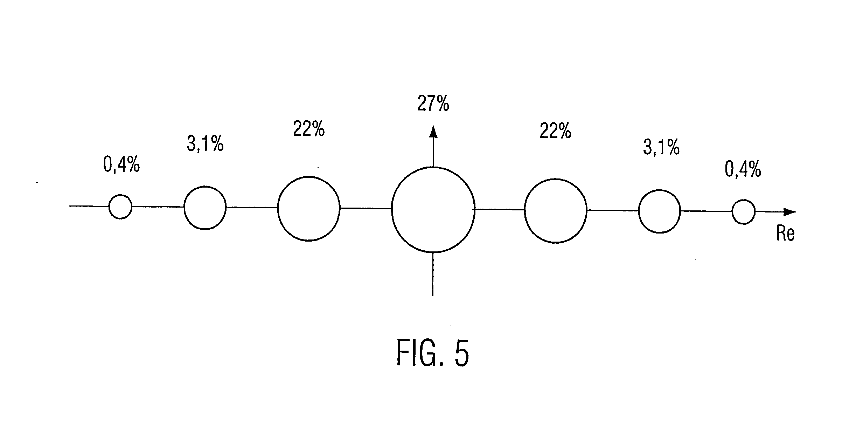

In this proposal, we consider an MC-CDMA system with Walsh-Hadamard spreading codes. A. Burry, J. Egle, and J. Lindner, "Diversity comparison of spreading transforms for multi-carrier spread spectrum transmission," IEEE Trans. Commun., vol. 51, No. 5, pages 774-781, May 2003, demonstrates that due to the WH spreading codes zero-valued subcarriers can occur in the transmit signal. For instance, Fig 5 shows the possible constellation points and their relative occurrence for a binary PSK symbol alphabet and a spreading length of 8. As can be inferred, a zero-sub-carrier occurs with 27 % probability. In the case of 4-QAM symbol alphabet and spreading length of 8, the probability of a zero-valued subcarrier is reduced to 8 % but still significant. Consequently, the LS estimates in Eq. 1 can only be computed for some sub-carriers and a method must be found for avoiding a division by zero in the LS estimation.

On a first look, the method proposed by F. Sanzi, Kanalschätzverfahren für Mobilfunksysteme mit Mehrträgermodulation OFDM, Ph.D. thesis, Universität Stuttgart, 2003, could be extended to an MC-CDMA system. However, this method has the following disadvantages. It is necessary to compute the variance and the value of each soft symbol used for ICE over all possible constellation points, i.e., $2^{MK}$ points, where $M$ is the number of bits per symbol and $K$ is the number of active users. This increases the complexity of the CE significantly. Furthermore, due to the WH spreading, zero-valued subcarriers can occur with high probability. Hence, the variance can be nearly zero for the soft symbols. The approximation of the LS channel estimate then causes strong noise enhancement and degradation of the channel estimates. Moreover, the approximation is not valid for hard-decided symbols, but only for soft-decided symbols.

V. Kühn "Iterative interference cancellation and channel estimation for coded OFDM-CDMA," Anchorage, Alaska, USA, May 2003 investigate the performance of an MC-CDMA system. Yet, they do not consider DDCE or ICE employing the two step channel estimation described by Eqs. 1 and 2. Therefore, the above problem of a division by zero in the LS estimation is not investigated. T.M. Schmidl, A.G. Dabak, and S. Hosur, "The use of iterative channel estimation (ICE) to improve link margin in wideband CDMA systems", in IEEE 49th Vehicular Technology Conference, 1999 (VTC 1999) study direct-sequence CDMA systems with DDCE and ICE, but yield no solution to the here described LS estimation problem for CDMA systems with WH spreading.

Therefore, to overcome this problem in the LS estimator of the ICE, we propose the following novel method, the modified LS channel estimation:

If the magnitude of the reconstructed sub-carrier is equal to zero or below a threshold, the initial estimate $\breve{H}_{n',k'}$ is set to zero, i. e.

$$\breve{H}_{n',k'} = \begin{cases} \dfrac{R_{n',k'}}{S_{n',k'}} & : \{n', k'\} \in R \\ \dfrac{R_{n',k'}}{S_{n',k'}} & : \{n', k'\} \notin R \text{ und } \left|\hat{S}_{n',k'}\right| > \rho_{th} \\ 0 & : \{n', k'\} \notin R \text{ und } \left|\hat{S}_{n',k'}\right| \le \rho_{th} \end{cases} \quad (8),$$

where $S_{n',k'}$ denotes an estimated data symbol, $S_{n',k'}$ a known reference symbol, $\rho_{th} \ge 0 \in R$ a threshold and $\{n',k'\} \in R_{ICE}$ the frequency and time indices taken from the set of estimated data symbols and known reference symbols at the receiver.

Consequently, the filtered channel estimates will not depend on the zero-valued subcarriers that would only cause noise enhancement and degrade the channel estimates. Furthermore, both soft- and hard-decided symbols can be used for ICE. To our knowledge, this novel MLS estimation method has not been proposed yet.

In the following, the modified LS estimate in Eq. 8 is extended, which is motivated by SUD for MC-CDMA. To remove the influence of the channel on a chip within the frame the received signal $R_{n,k}$ is multiplied with an equalization coefficient $G_{n,k}$ to obtain

$$U_{n,k} = G_{n,k} R_{n,k} \qquad (9)$$

In MC-CDMA, the following SUD can compensate the influence of the channel to a certain extent.

Equal Gain Combining (EGC) is a diversity combining technique which weights all used sub-carriers with unit amplitude as disclosed in S. Kaiser, Multi-Carrier CDMA Mobile Radio Systems - Analysis and Optimization of Detection, Ph.D. thesis, 1998. With EGC each sub-carrier is corrected in its phase by multiplying it with

$$G_{n,k} = \frac{H_{n,k}^*}{\left|H_{n,k}\right|} \qquad (10)$$

Zero-Forcing (ZF) Equalization can completely remove the influence of the channel by choosing the equalization coefficient as

$$G_{n,k} = \frac{1}{H_{n,k}} \qquad (11)$$

Therefore, we propose the following extensions to Eq. 8:

Equal Gain channel estimates:

$$\breve{H}_{n',k'} = \begin{cases} \dfrac{R_{n',k'}}{S_{n',k'}} & : \ \{n',\,k'\} \in R \\[2mm] \dfrac{\hat{S}^{*}_{n',k'} R_{n',k'}}{|\hat{S}_{n',k'}|} & : \ \{n',\,k'\} \notin R \ \text{und} \ |\hat{S}_{n',k'}| > \rho_{th} \\[2mm] 0 & : \ \{n',\,k'\} \notin R \ \text{und} \ |\hat{S}_{n',k'}| \leq \rho_{th} \end{cases} \qquad (13),$$

where $\rho_{th} \geq 0 \in R$ and $\{n',\,k\} \in R_{ICE}$. have the same meaning as in Eq. 8.

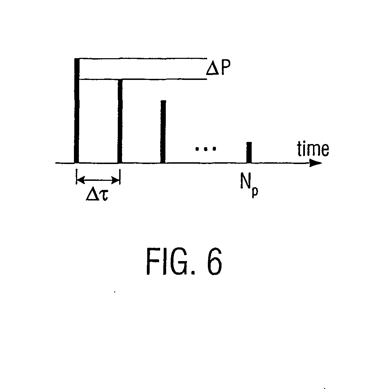

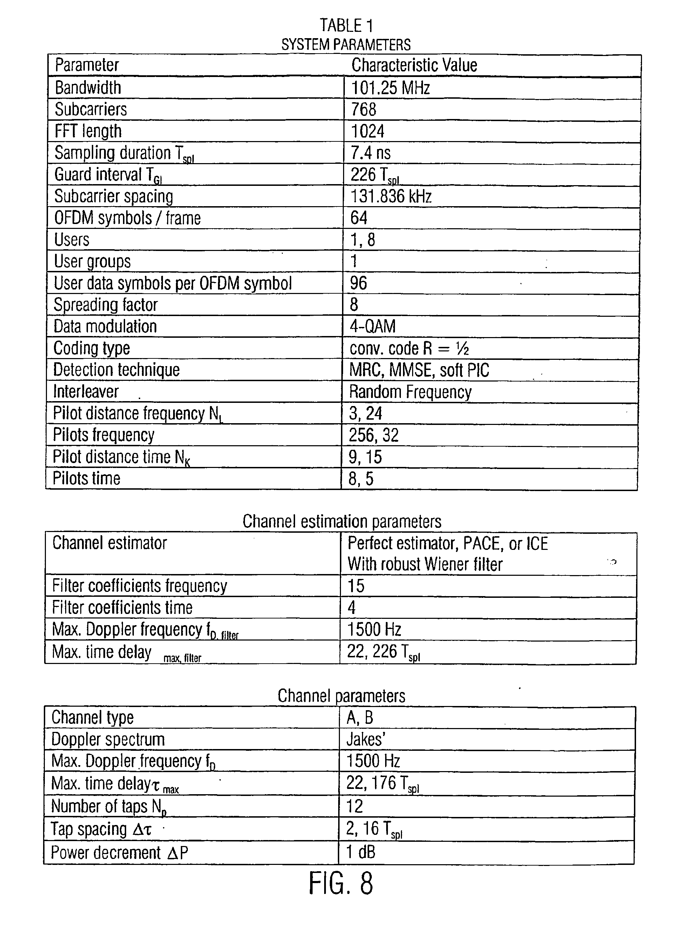

This section presents simulation results for the MC-CDMA system with WH spreading, PACE, and ICE. The simulation parameters are listed in Fig. 8 and the power delay profile of the channel models are depicted in Fig. 6. For the channel model A, the non-zero tap spacing of the power delay profile $\Delta\tau$ is 2 samples and the maximum delay $\tau_{max}$ is 22 samples, whereas for the channel model B, $\Delta\tau = 16$ and $\tau_{max} = 176$. By default, the pilot spacing in frequency direction is 3 and in time direction 9. Since ICE requires the detection of all the signals from all the users within one user group, the single-user detectors are applied to all $K$ user signals. For the robust PACE and ICE a 1D|1D Wiener filter with 15 filter coefficients in frequency direction and 4 in time direction was used to compute the channel estimates in Eq. 2.

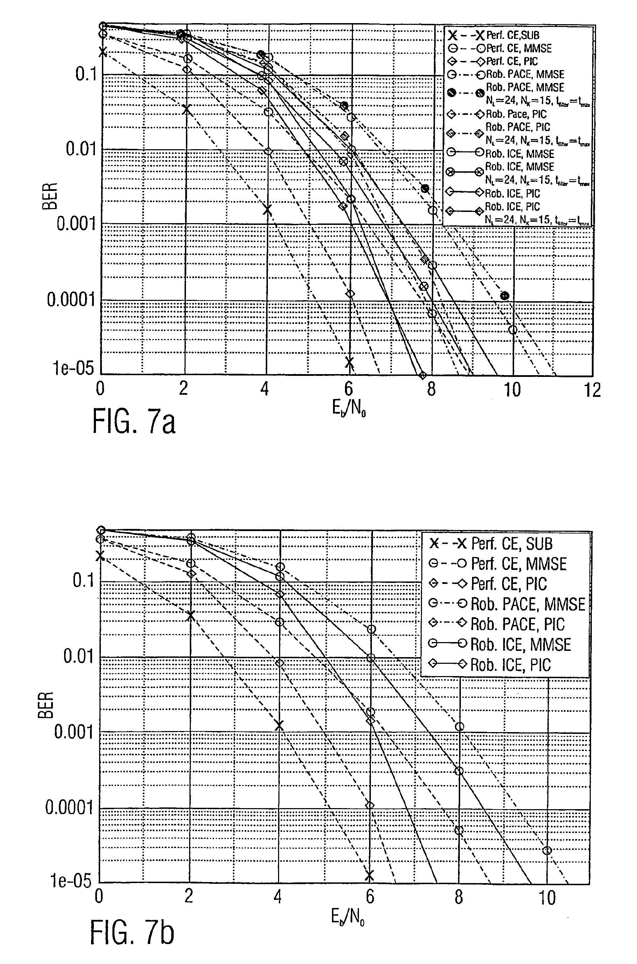

The bit error rate (BER) curves in Fig. 7a and 7b demonstrate that the proposed ICE can improve PACE for both the A and B channel models in all cases. The performance gain of robust ICE compared to robust PACE at a BER of $10^{-4}$ is about 1 dB for the A channel with the default pilot spacing, $\tau_{max,filter} = T_{GI}$, and MMSE SUD. It is 0.9 dB when replacing the MMSE SUD with the PIC MUD. If a pilot spacing of 24 in frequency direction and 15 in time direction is chosen and the delay of the 1D|1D. Wiener filter is matched to the channel delay, the performance increases by 1.9 dB and 1.4 dB for MMSE SUD and PIC MUD, respectively. Note that the performance loss due to MAI and imperfect channel knowledge for robust ICE with PIC MUD compared to the single-user bound (SUB) is reduced to 1.8 dB as opposed to 2.7 dB for robust PACE with PIC MUD at a BER of $10^{-4}$.

In Fig. 7b, simulation results for the B channel model and the default pilot spacing are displayed. Note that the default pilot spacing of 3 and 9 in frequency and time direction was optimized for this channel model. Consequently, the results for the proposed ICE are very promising since it still gains about 0.8 dB and 0.9 dB for MMSE SUD and PIC MUD compared to PACE with the corresponding detection algorithms at a BER of $10^{-4}$. The performance loss between perfect CE and robust ICE with MMSE SUD and PIC MUD is only 0.9 dB and 0.8 dB, respectively.

The inventive channel estimation scheme can be used in an MC-CDMA system employing a receiver with an iterative channel estimator. The MC-CDMA system transmits $M$ data symbols per user and per OFDM symbol in parallel, with each data symbol being spread with a Walsh-Hadamard code of length $L$. Due to the superposition of sequences being spreaded using e.g. WH codes, zero-valued subcarriers can occur, which cannot be used to compute least-squares channel estimates in ICE. Therefore, we propose a novel method, the modified LS channel estimation, to overcome this problem, i.e., the LS channel estimates are set to zero if the reconstructed sub-carrier is zero or below a threshold. Note, the novel MLS channel estimation can be applied with ICE to any other MC-CDMA, CDMA or multi-carrier system with general spreading codes or symbol alphabet whose superposition or constellation yields values below a certain threshold. Moreover, we propose to extend the MLS channel estimates to equal gain or MMSE channel estimates. We further investigate the robustness of the novel method if the channel statistics are not known perfectly. Simulation results demonstrate that robust ICE can improve robust PACE even for pilot spacings and robust assumptions that were optimized for robust PACE.

In this proposal we investigate the performance of a multi-carrier code division multiple access (MC-CDMA) system employing a receiver with an iterative channel estimator (ICE). The MC-CDMA system transmits $M$ data symbols per user and per orthogonal frequency division multiplexing (OFDM) symbol in parallel, with each data symbol being spread with a Walsh-Hadamard (WH) code of length $L$. Due to the superposition of sequences (spreaded sequences) being spreaded using e.g. WH codes, zero-valued subcarriers can occur, which cannot be used to compute least-squares (LS) channel estimates in ICE. Therefore, we propose a novel method, the modified LS (MLS) channel estimation, to overcome this problem, i.e., the LS channel estimates are set to zero if the reconstructed sub-carrier is zero or below a threshold. Note, the novel MLS channel estimation can be applied with ICE to any other MC-CDMA. CDMA or multi-carrier system with general spreading codes or symbol alphabet whose superposition or constellation yields values below a certain threshold. Moreover, we propose to extend the MLS channel estimates to equal gain (EG) or minimum mean square error (MMSE) channel estimates. We further investigate the robustness of the novel method if the channel statistics are not known perfectly.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

**Claims**

1. Apparatus for iteratively estimating a channel transfer function of a communication channel from a multi-carrier spread spectrum received signal being a receivable version of a multi-carrier spread spectrum transmit signal, the transmit signal being transmitted through the communication channel, the transmit signal being a frequency-time transformed version of a transmit sequence, the transmit sequence resulting from processing a data sequence using a processing scheme, the apparatus comprising:

   a detector (101) for obtaining an estimate (105) of the data sequence from a spectrum of the received signal;
   a processor (107) for processing the estimate (105) of the data sequence to obtain an estimate (109) of the transmit sequence using the processing scheme;
   a channel estimator (113) for estimating the channel transfer function using the estimate (109) of the transmit sequence and the spectrum of the received signal to obtain an estimate (115) of the channel transfer function and for comparing an amplitude of a value of the estimate of the transmit sequence to a threshold, wherein the channel estimator (113) is configured for providing a predetermined value as an estimate (115) of the channel transfer function at a frequency point when the amplitude of the value of the estimate (109) of the transmit sequence at the frequency point is below the threshold or for combining the value of the estimate (109) of the transmit sequence at the frequency point with a value of the spectrum of the received signal at the frequency point to obtain an estimate (115) of the channel transfer function at the frequency point when the amplitude of the value of the estimate (115) of the transmit sequence at the frequency point is above the threshold; wherein the detector (101) is configured for obtaining a further estimate (105) of the data sequence from the estimate (115) of the channel transfer function and the spectrum of the received signal in a further iteration.

2. Apparatus according to claim 1, wherein the predetermined value is zero, or wherein the predetermined value is an estimate of the channel transfer function at the frequency point being obtained in a previous iteration.

3. Apparatus according to claims 1 or 2, wherein the threshold is in a range between 0 and 10 % of a minimum transmit sequence value from a set of possible transmit sequence values.

4. Apparatus according to claims 1 to 3, wherein the channel estimator (113) is configured for performing a least squares estimation or a minimum mean squared error estimation to obtain an estimate of the channel transfer function.

5. Apparatus according to claim 4, wherein the channel estimator (113) is configured for dividing a value of the spectrum of the received sequence by a value of the estimate of the transmit sequence or for multiplying the value of the spectrum of the received sequence by a complex conjugated version of the value of the estimate of the transmit sequence for performing least squares estimation.

6. Apparatus according to claims 1 to 5, wherein the spectrum of the received signal comprises a set of spectral values, each spectral value in the set of spectral values being received at a different time instant at the same frequency point, wherein the channel estimator (113) is configured for estimating the channel transfer function at the frequency point for different time instants.

7. Apparatus according to claims 1 to 6, wherein the spectrum of the received signal comprises a set of sub-carrier values, each sub-carrier value in a set of sub-carrier values being associated with a different frequency point, wherein the channel estimator (113) is configured for estimating the channel transfer function at different frequency points.

8. Apparatus according to claims 1 to 7, wherein the spectrum of the received signal comprises a set of received values, the set of received values comprising received versions of pilot symbols at pilot positions, the pilot symbols being transmitted by a transmitter for channel estimation, wherein the channel estimator (113) is configured for estimating the channel transfer function at pilot positions using the pilot symbols and the received versions of the pilot symbols.

9. Apparatus according to claim 8, wherein the set of received values comprises data values at intermediate positions between the received versions of the pilot symbols, wherein the channel estimator (113) is configured for estimating the channel transfer function at the intermediate positions by interpolating between the estimates of the channel transfer function at the pilot positions.

10. Apparatus according to claim 9, wherein the channel estimator (113) is configured for inserting zeroes at the intermediate positions to obtain a zero-padded estimate of the channel transfer function, and for filtering the zero-padded estimate of the channel transfer function to obtain an estimate of the channel transfer function.

11. Apparatus according to claims 1 to 10, wherein the channel estimator (113) is configured for filtering the estimate of the channel transfer function to obtain a smoothed estimate of the channel transfer function, and for providing the smoothed estimate of the channel transfer function as the channel transfer function to the detector (101).

12. Apparatus according to claim 11, wherein the channel estimator (113) is configured for low-pass filtering the estimate of the channel transfer function.

13. Apparatus according to claims 11 and 12, wherein the channel estimator (113) is configured for Wiener filtering the estimate of the channel transfer function.

14. Apparatus according to claims 1 to 13, comprising a time-frequency transformer for time-frequency transforming the received signal to obtain the spectrum of the received signal.

15. Apparatus according to claims 1 to 14, wherein the detector is configured for equalizing the spectrum of the received signal using the estimate of the channel transfer function to obtain an equalized sequence, and for detecting the data sequence in the equalized sequence to obtain the estimate of the data sequence.

16. Apparatus according to claim 15, wherein the detector (101) is configured for frequency domain equalizing the spectrum of the received signal.

17. Apparatus according to claims 1 to 16, wherein the processing scheme comprises encoding the data sequence to obtain an encoded sequence, and modulating the encoded sequence.

18. Receiver apparatus, comprising:

   a demodulator for demodulating an input signal to obtain a received signal;
   a time-frequency transformer for time-frequency transforming the received signal to obtain the spectrum of the received signal;
   the apparatus for iteratively estimating a channel transfer function according to claims 1 to 17.

19. Method for iteratively estimating a channel transfer function of a communication channel from a multi-carrier spread spectrum received signal being a receivable version of a multi-carrier spread spectrum transmit signal, the transmit signal being transmitted through the communication channel, the transmit signal being a frequency-time transformed version of a transmit sequence, the transmit sequence resulting from processing a data sequence using a processing scheme, the method comprising:

   obtaining an estimate of the data sequence from a spectrum of the received signal;
   processing the estimate of the data sequence to obtain an estimate of the transmit sequence using the processing scheme;
   comparing an amplitude of a value of the estimate of the transmit sequence to a threshold;
   estimating the channel transfer function using the estimate of the transmit sequence and the spectrum of the received signal to obtain an estimate of the channel transfer function, wherein a predetermined value as an estimate of the channel transfer function at a frequency point is provided when the amplitude of the value of the estimate of the transmit sequence is below the threshold, or wherein the value of the estimate of the transmit sequence is combined with the value of the spectrum of the received signal at the frequency points to obtain an estimate of the channel transfer function at the frequency point when the amplitude of the value of the estimate of the transmit sequence at the frequency point is above the threshold; and
   using the estimate of the channel transfer function and the spectrum of the received signal in order to obtain a further estimate of the data sequence in a further iteration.

**20.** Receiving method, comprising:

de-modulating an input signal to obtain a received signal;
time-frequency transforming the received signal to obtain the spectrum of the received signal; and
iteratively estimating a channel transfer function from the received signal in accordance with claim 19.

**21.** Computer program which when run on a computer performs the method of claim 19 or the method of claim 20.

**Patentansprüche**

**1.** Vorrichtung zum iterativen Schätzen einer Kanalsendefunktion eines Kommunikationskanals aus einem Mehrfachträger-Streuspektrum-Empfangssignal, das eine empfangbare Version eines Mehrfachträger-Streuspektrum-Sendesignals ist, wobei das Sendesignal durch den Kommunikationskanal übertragen wird, wobei das Sendesignal eine Frequenz-Zeit-transformierte Version einer Sendesequenz ist, wobei die Sendesequenz aus dem Verarbeiten einer Datensequenz unter Verwendung eines Verarbeitungsschemas resultiert, wobei die Vorrichtung folgende Merkmale aufweist:

einen Detektor (101) zum Erhalten eines Schätzwerts (105) der Datensequenz aus einem Spektrum des Empfangssignals;
einen Prozessor (107) zum Verarbeiten des Schätzwerts (105) der Datensequenz, um einen Schätzwert (109) der Sendesequenz unter Verwendung des Verarbeitungsschemas zu erhalten;
einen Kanalschätzer (113) zum Schätzen der Kanalsendefunktion unter Verwendung des Schätzwerts (109) der Sendesequenz und des Spektrums des Empfangssignals, um einen Schätzwert (115) der Kanalsendefunktion zu erhalten, und zum Vergleichen einer Amplitude eines Werts des Schätzwerts der Sendesequenz mit einer Schwelle, wobei der Kanalschätzer (113) konfiguriert ist zum Liefern eines vorbestimmten Werts als einen Schätzwert (115) der Kanalsendefunktion an einem Frequenzpunkt, wenn die Amplitude des Werts des Schätzwerts (109) der Sendesequenz an dem Frequenzpunkt unter der Schwelle ist, oder zum Kombinieren des Werts des Schätzwerts (109) der Sendesequenz an dem Frequenzpunkt mit einem Wert des Spektrums des Empfangssignals an dem Frequenzpunkt, um einen Schätzwert (115) der Kanalsendefunktion an dem Frequenzpunkt zu erhalten, wenn die Amplitude des Werts des Schätzwerts (115) der Sendesequenz an dem Frequenzpunkt über der Schwelle ist; wobei
der Detektor (101) zum Erhalten eines weiteren Schätzwerts (105) der Datensequenz aus dem Schätzwert (115) der Kanalsendefunktion und dem Spektrum des Empfangssignals bei einer weiteren Iteration konfiguriert ist.

**2.** Vorrichtung gemäß Anspruch 1, bei der der vorbestimmte Wert Null ist, oder bei der der vorbestimmte Wert ein Schätzwert der Kanalsendefunktion an dem Frequenzpunkt ist, der bei einer vorangehenden Iteration erhalten wird.

**3.** Vorrichtung gemäß Anspruch 1 oder 2, bei der die Schwelle in einem Bereich zwischen 0 und 10 % eines Minimalsendesequenzwerts aus einem Satz von möglichen Sendesequenzwerten ist.

**4.** Vorrichtung gemäß einem der Ansprüche 1 bis 3, bei der der Kanalschätzer (113) konfiguriert ist, um eine Schätzung der geringsten Quadrate oder eine Schätzung eines minimalen mittleren quadratischen Fehlers auszuführen, um einen Schätzwert der Kanalsendefunktion zu erhalten.

**5.** Vorrichtung gemäß Anspruch 4, bei der der Kanalschätzer (113) zum Teilen eines Werts des Spektrums der empfangenen Sequenz durch einen Wert des Schätzwerts der Sendesequenz oder zum Multiplizieren des Werts des Spektrums der empfangenen Sequenz mit einer komplexkonjugierten Version des Werts des Schätzwerts der Sendesequenz zum Ausführen einer Schätzung geringster Quadrate konfiguriert ist.

**6.** Vorrichtung gemäß einem der Ansprüche 1 bis 5, bei der das Spektrum des Empfangssignals einen Satz aus Spektralwerten aufweist, wobei jeder Spektralwert in dem Satz aus Spektralwerten zu einem unterschiedlichen Zeitpunkt an demselben Frequenzpunkt empfangen wird, wobei der Kanalschätzer (113) zum Schätzen der Kanalsendefunktion an dem Frequenzpunkt für unterschiedliche Zeitpunkte konfiguriert ist.

**7.** Vorrichtung gemäß einem der Ansprüche 1 bis 6, bei der das Spektrum des Empfangssignals einen Satz aus Teilträgerwerten aufweist, wobei jeder Teilträgerwert in einem Satz aus Teilträgerwerten einem unterschiedlichen Frequenzpunkt zugeordnet ist, wobei der Kanalschätzer (113) zum Schätzen der Kanalsendefunktion an unterschiedlichen Frequenzpunkten konfiguriert ist.

8. Vorrichtung gemäß einem der Ansprüche 1 bis 7, bei der das Spektrum des Empfangssignals einen Satz aus empfangenen Werten aufweist, wobei der Satz aus empfangenen Werten empfangene Versionen aus Pilotsymbolen an Pilotpositionen aufweist, wobei die Pilotsymbole durch einen Sender zur Kanalschätzung übertragen werden, wobei der Kanalschätzer (113) zum Schätzen der Kanalsendefunktion an Pilotpositionen unter Verwendung der Pilotsymbole und der empfangenen Versionen der Pilotsymbole konfiguriert ist.

9. Vorrichtung gemäß Anspruch 8, bei der der Satz aus empfangenen Werten Datenwerte an Zwischenpositionen zwischen den empfangenen Versionen der Pilotsymbole aufweist, wobei der Kanalschätzer (113) zum Schätzen der Kanalsendefunktion an den Zwischenpositionen durch Interpolieren zwischen den Schätzwerten der Kanalsendefunktion an den Pilotpositionen konfiguriert ist.

10. Vorrichtung gemäß Anspruch 9, bei der der Kanalschätzer (113) zum Einfügen von Nullen an den Zwischenpositionen, um einen mit Null aufgefüllten Schätzwert der Kanalsendefunktion zu erhalten, und zum Filtern des mit Null aufgefüllten Schätzwerts der Kanalsendefunktion, um einen Schätzwert der Kanalsendefunktion zu erhalten, konfiguriert ist.

11. Vorrichtung gemäß einem der Ansprüche 1 bis 10, bei der der Kanalschätzer (113) zum Filtern des Schätzwerts der Kanalsendefunktion, um einen geglätteten Schätzwert der Kanalsendefunktion zu erhalten, und zum Liefern des geglätteten Schätzwerts der Kanalsendefunktion als die Kanalsendefunktion zu dem Detektor (101), konfiguriert ist.

12. Vorrichtung gemäß Anspruch 11, bei der der Kanalschätzer (113) für ein Tiefpassfiltern des Schätzwerts der Kanalsendefunktion konfiguriert ist.

13. Vorrichtung gemäß Anspruch 11 und 12, bei der der Kanalschätzer (113) zum Wiener-Filtern des Schätzwerts der Kanalsendefunktion konfiguriert ist.

14. Vorrichtung gemäß einem der Ansprüche 1 bis 13, die einen Zeit-Frequenz-Transformator zum Zeit-Frequenz-Transformieren des Empfangssignals aufweist, um das Spektrum des Empfangssignals zu erhalten.

15. Vorrichtung gemäß einem der Ansprüche 1 bis 14, bei der der Detektor zum Abgleichen des Spektrums des Empfangssignals unter Verwendung des Schätzwerts der Kanalsendefunktion, um eine abgeglichene Sequenz zu erhalten, und zum Erfassen der Datensequenz in der abgeglichenen Sequenz, um den Schätzwert der Datensequenz zu erhalten, konfiguriert ist.

16. Vorrichtung gemäß Anspruch 15, bei der der Detektor (101) für ein Frequenzbereichsabgleichen des Spektrums des Empfangssignals konfiguriert ist.

17. Vorrichtung gemäß einem der Ansprüche 1 bis 16, bei der das Verarbeitungsschema das Codieren der Datensequenz, um eine codierte Sequenz zu erhalten, und das Modulieren der codierten Sequenz, aufweist.

18. Empfängervorrichtung, die folgende Merkmale aufweist:

   einen Demodulator zum Demodulieren eines Eingangssignals, um ein Empfangssignals zu erhalten;
   einen Zeit-Frequenz-Transformator zum Zeit-Frequenz-Transformieren des Empfangssignals, um das Spektrum des Empfangssignals zu erhalten;
   die Vorrichtung zum iterativen Schätzen einer Kanalsendefunktion gemäß den Ansprüchen 1 bis 17.

19. Verfahren zum iterativen Schätzen einer Kanalsendefunktion eines Kommunikationskanals aus einem Mehrfachträger-Streuspektrum-Empfangssignal, das eine empfangbare Version eines Mehrfachträger-Streuspektrum-Sendesignals ist, wobei das Sendesignal durch den Kommunikationskanal übertragen wird, wobei das Sendesignal eine Frequenz-Zeit-transformierte Version einer Sendesequenz ist, wobei die Sendesequenz aus dem Verarbeiten einer Datensequenz unter Verwendung eines Verarbeitungsschemas resultiert, wobei das Verfahren folgende Schritte aufweist:

Erhalten eines Schätzwerts der Datensequenz aus einem Spektrum des Empfangssignals;

Verarbeiten des Schätzwerts der Datensequenz, um einen Schätzwert der Sendesequenz zu erhalten, unter Verwendung des Verarbeitungsschemas;

Vergleichen einer Amplitude eines Werts des Schätzwerts der Sendesequenz mit einer Schwelle;

Schätzen der Kanalsendefunktion unter Verwendung des Schätzwerts der Sendesequenz und des Spektrums des Empfangssignals, um einen Schätzwert der Kanalsendefunktion zu erhalten, wobei ein vorbestimmter Wert als ein Schätzwert der Kanalsendefunktion an einem Frequenzpunkt vorgesehen ist, wenn die Amplitude des Werts des Schätzwerts der Sendesequenz unter der Schwelle ist, oder wobei der Wert des Schätzwerts der Sendesequenz mit dem Wert des Spektrums des Empfangssignals an den Frequenzpunkten kombiniert wird, um einen Schätzwert der Kanalsendefunktion an dem Frequenzpunkt zu erhalten, wenn die Amplitude des Werts des Schätzwerts der Sendesequenz an dem Frequenzpunkt über der Schwelle ist; und

Verwenden des Schätzwerts der Kanalsendefunktion und des Spektrums des Empfangssignals, um einen weiteren Schätzwert der Datensequenz in einer weiteren Iteration zu erhalten.

20. Empfangsverfahren, das folgende Schritte aufweist:

Demodulieren eines Eingangssignals, um ein Empfangssignal zu erhalten;

Zeit-Frequenz-Transformieren des Empfangssignals, um das Spektrum des Empfangssignals zu erhalten; und

iteratives Schätzen einer Kanalsendefunktion aus dem Empfangssignal gemäß Anspruch 19.

21. Computerprogramm, das, wenn es auf einem Computer läuft, das Verfahren gemäß Anspruch 19 oder das Verfahren gemäß Anspruch 20 ausführt.

**Revendications**

1. Appareil pour l'estimation itérative d'une fonction de transfert d'un canal de transmission d'un signal reçu à spectre étalé sur de multiples porteuses qui est une version pouvant être reçue d'un signal de transmission à spectre étalé sur de multiples porteuses, le signal de transmission étant transmis via le canal de transmission, le signal de transmission étant une version transformée fréquence-temps d'une séquence de transmission, la séquence de transmission résultant du traitement d'une séquence de données à l'aide d'un schéma de traitement, l'appareil comprenant :

un détecteur (101) destiné à obtenir une estimation (105) de la séquence de données à partir d'un spectre du signal reçu ;

un processeur (107) destiné à traiter l'estimation (105) de la séquence de données, pour obtenir une estimation (109) de la séquence de transmission à l'aide du schéma de traitement ;

un estimateur de canal (113) destiné à estimer la fonction de transfert de canal à l'aide de l'estimation (109) de la séquence de transmission et du spectre du signal reçu, pour obtenir une estimation (115) de la fonction de transfert de canal et pour comparer une grandeur d'une valeur de l'estimation de la séquence de transmission avec un seuil, dans lequel l'estimateur de canal (113) est configuré de manière à fournir une valeur prédéterminée comme estimation (115) de la fonction de transfert de canal à un point de fréquence lorsque la grandeur de la valeur de l'estimation (109) de la séquence de transmission au point de fréquence se situe au-dessous du seuil ou à combiner la valeur de l'estimation (109) de la séquence de transmission au point de fréquence avec une valeur du spectre du signal reçu au point de fréquence, pour obtenir une estimation (115) de la fonction de transfert de canal au point de fréquence lorsque la grandeur de la valeur de l'estimation (115) de la séquence de transmission au point de fréquence se situe au-dessus du seuil ; dans lequel

le détecteur (101) est configuré de manière à obtenir une autre estimation (105) de la séquence de données de l'estimation (115) de la fonction de transfert de canal et du spectre du signal reçu dans une autre itération.

2. Appareil selon la revendication 1, dans lequel la valeur prédéterminée est zéro, ou dans lequel la valeur prédéterminée est une estimation de la fonction de transfert de canal au point de fréquence obtenu à l'itération précédente.

3. Appareil selon les revendications 1 ou 2, dans lequel le seuil est de l'ordre de 0 à 10% d'une valeur de séquence de transmission minimale parmi un ensemble de possibles valeurs de séquence de transmission.

4. Appareil selon les revendications 1 à 3, dans lequel l'estimateur de canal (113) est configuré de manière à effectuer une estimation de moindres carrés ou une estimation d'erreur quadratique moyenne minimale, pour obtenir une estimation de la fonction de transfert de canal.

5. Appareil selon la revendication 4, dans lequel l'estimateur de canal (113) est configuré de manière à diviser une valeur du spectre de la séquence reçue par une valeur de l'estimation de la séquence de transmission ou à multiplier la valeur du spectre de la séquence reçue par une version conjuguée complexe de la valeur de l'estimation de la séquence de transmission, pour effectuer une estimation de moindres carrés.

6. Appareil selon les revendications 1 à 5, dans lequel le spectre du signal reçu comprend un ensemble de valeurs spectrales, chaque valeur spectrale dans l'ensemble de valeurs spectrales étant reçue à un moment différent au même point de fréquence, dans lequel l'estimateur de canal (113) est configuré de manière à estimer la fonction de transfert de canal au point de fréquence pour différents moments.

7. Appareil selon les revendications 1 à 6, dans lequel le spectre du signal reçu comprend un ensemble de valeurs de sous-porteuse, chaque valeur de sous-porteuse dans un ensemble de valeurs de sous-porteuse étant associée à un point de fréquence différent, dans lequel l'estimateur de canal (113) est configuré de manière à estimer la fonction de transfert de canal à différents points de fréquence.

8. Appareil selon les revendications 1 à 7, dans lequel le spectre du signal reçu comprend un ensemble des valeurs reçues, l'ensemble de valeurs reçues comprenant des versions reçues des symboles pilotes aux positions pilotes, les symboles pilotes étant transmis par un émetteur pour l'estimation de canal, dans lequel l'estimateur de canal (113) est configuré de manière à estimer la fonction de transfert de canal aux positions pilotes à l'aide des symboles pilotes et des versions reçues des symboles pilotes.

9. Appareil selon la revendication 8, dans lequel l'ensemble de valeurs reçues comprend des valeurs de données à des positions intermédiaires entre les versions reçues des symboles pilotes, dans lequel l'estimateur de canal (113) est configuré de manière à estimer la fonction de transfert de canal aux positions intermédiaires par interpolation entre les estimations de la fonction de transfert de canal aux positions pilotes.

10. Appareil selon la revendication 9, dans lequel l'estimateur de canal (113) est configuré pour insérer des zéros aux positions intermédiaires, pour obtenir une estimation remplie de zéros de la fonction de transfert de canal, et à filtrer l'estimation remplie de zéros de la fonction de transfert de canal, pour obtenir une estimation de la fonction de transfert de canal.

11. Appareil selon les revendications 1 à 10, dans lequel l'estimateur de canal (113) est configuré de manière à filtrer l'estimation de la fonction de transfert de canal, pour obtenir une estimation lissée de la fonction de transfert de canal, et à fournir au détecteur (101) l'estimation lissée de la fonction de transfert de canal comme fonction de transfert de canal.

12. Appareil selon la revendication 11, dans lequel l'estimateur de canal (113) est configuré de manière à filtrer passe-bas l'estimation de la fonction de transfert de canal.

13. Appareil selon les revendications 11 et 12, dans lequel l'estimateur de canal (113) est configuré de manière à effectuer une filtration de Wiener de l'estimation de la fonction de transfert de canal.

14. Appareil selon les revendications 1 à 13, comprenant un transformateur de temps-fréquence destiné à effectuer une transformation de temps-fréquence du signal reçu, pour obtenir le spectre du signal reçu.

15. Appareil selon les revendications 1 à 14, dans lequel le détecteur est configuré de manière à égaliser le spectre du signal reçu à l'aide de l'estimation de la fonction de transfert de canal, pour obtenir une séquence égalisée, et à détecter la séquence de données dans la séquence égalisée, pour obtenir l'estimation de la séquence de données.

16. Appareil selon la revendication 15, dans lequel le détecteur (101) est configuré de manière à égaliser le spectre du signal reçu dans le domaine de la fréquence.

17. Appareil selon les revendications 1 à 16, dans lequel le schéma de traitement comprend le codage de la séquence de données, pour obtenir un séquence codée, et la modulation de la séquence codée.

18. Appareil récepteur, comprenant:

un démodulateur destiné à démoduler un signal d'entrée, pour obtenir un signal reçu;

un transformateur temps-fréquence destiné à la transformation de temps-fréquence du signal reçu, pour obtenir le spectre du signal reçu;

l'appareil pour l'estimation itérative d'une fonction de transfert de canal selon les revendications 1 à 17.

19. Procédé pour l'estimation itérative d'une fonction de transfert d'un canal de transmission d'un signal reçu à spectre étalé sur de multiples porteuses qui est une version pouvant être reçue d'un signal de transmission à spectre étalé sur de multiples porteuses, le signal de transmission étant transmis via le canal de transmission, le signal de transmission étant une version transformée séquence-temps d'une séquence de transmission, la séquence de transmission résultant du traitement d'une séquence de données à l'aide d'un schéma de traitement, le procédé comprenant:

obtenir une estimation de la séquence de données à partir d'un spectre du signal reçu;

traiter l'estimation de la séquence de données, pour obtenir une estimation de la séquence de transmission à l'aide du schéma de traitement;

comparer une grandeur d'une valeur de l'estimation de la séquence de transmission avec un seuil;

estimer la fonction de transfert de canal à l'aide de l'estimation de la séquence de transmission et du spectre du signal reçu, pour obtenir une estimation de la fonction de transfert de canal, dans lequel est fournie une valeur prédéterminée comme estimation de la fonction de transfert de canal à un point de fréquence lorsque la grandeur de la valeur de l'estimation de la séquence de transmission se situe au-dessous du seuil, ou dans lequel la valeur de l'estimation de la séquence de transmission est combinée avec une valeur du spectre du signal reçu au point de fréquence, pour obtenir une estimation de la fonction de transfert de canal au point de fréquence lorsque la grandeur de la valeur de l'estimation de la séquence de transmission au point de fréquence se situe au-dessus du seuil; et

utiliser l'estimation de la fonction de transfert de canal et le spectre du signal reçu, pour obtenir une autre estimation de la séquence de données dans une autre itération.

20. Procédé pour recevoir, comprenant :

démoduler un signal d'entrée, pour obtenir un signal reçu;

effectuer une transformation de temps-fréquence du signal reçu, pour obtenir le spectre du signal reçu; et

effectuer une estimation itérative d'une fonction de transfert de canal à partir du signal reçu selon la revendication 19.

21. Programme d'ordinateur qui, lorsqu'il est exécuté sur un ordinateur, réalise le procédé selon la revendication 19 ou le procédé selon la revendication 21.

FIG. 1

FIG. 2

FIG. 3

$IC_{Analysis}(k)$

Det → Desp → DMOD → $\pi^{-1}$

FIG. 4a       (a) $IC_{Analysis}(k)$

$IC_{Synthesis}(k)$

Soft Decod → $\pi$ → MOD → Spread → Fading H

FIG. 4b       (b) $IC_{Synthesis}(k)$

FIG. 4c

(c) PIC

EP 1 757 051 B1

FIG. 5

FIG. 6

FIG. 7a

FIG. 7b

TABLE 1
SYSTEM PARAMETERS

| Parameter | Characteristic Value |
|---|---|
| Bandwidth | 101.25 MHz |
| Subcarriers | 768 |
| FFT length | 1024 |
| Sampling duration $T_{spl}$ | 7.4 ns |
| Guard interval $T_{GI}$ | 226 $T_{spl}$ |
| Subcarrier spacing | 131.836 kHz |
| OFDM symbols / frame | 64 |
| Users | 1, 8 |
| User groups | 1 |
| User data symbols per OFDM symbol | 96 |
| Spreading factor | 8 |
| Data modulation | 4-QAM |
| Coding type | conv. code R = ½ |
| Detection technique | MRC, MMSE, soft PIC |
| Interleaver | Random Frequency |
| Pilot distance frequency $N_l$ | 3, 24 |
| Pilots frequency | 256, 32 |
| Pilot distance time $N_K$ | 9, 15 |
| Pilots time | 8, 5 |

Channel estimation parameters

| Channel estimator | Perfect estimator, PACE, or ICE With robust Wiener filter |
|---|---|
| Filter coefficients frequency | 15 |
| Filter coefficients time | 4 |
| Max. Doppler frequency $f_{D, filter}$ | 1500 Hz |
| Max. time delay $_{max, filter}$ | 22, 226 $T_{spl}$ |

Channel parameters

| Channel type | A, B |
|---|---|
| Doppler spectrum | Jakes' |
| Max. Doppler frequency $f_D$ | 1500 Hz |
| Max. time delay $\tau_{max}$ | 22, 176 $T_{spl}$ |
| Number of taps $N_p$ | 12 |
| Tap spacing $\Delta\tau$ | 2, 16 $T_{spl}$ |
| Power decrement $\Delta P$ | 1 dB |

FIG. 8

## REFERENCES CITED IN THE DESCRIPTION

**Non-patent literature cited in the description**

- **F. SANZI ; S. TEN BRINK.** Iterative channel estimation and decoding with product codes in multi-carrier systems. *Iterative channel estimation and decoding with product codes in multi-carrier systems,* 2000, 1338-1344
- **T.M. SCHMIDL ; A.G. DABAK ; S. HOSUR.** The use of iterative channel estimation (ICE) to improve link margin in wideband CDMA systems. *IEEE 49th Vehicular Technology Conference,* 1999
- **V. KÜHN.** Iterative interference cancellation and channel estimation for coded OFDM-CDMA. *Anchorage,* May 2003
- **F. SANZI ; S. JELTING ; J. SPEIDEL.** A comparative study of iterative channel estimators for mobile OFDM systems. *IEEE Trans. Wireless Commun,* September 2003, 849-859
- **F. SANZI.** Kanalschatzverfahren für Mobilfunksysteme mit Mehrträgermodulation OFDM. *Ph. D. thesis,* 2003
- **P. HOEHER ; S. KAISER ; P. ROBERTSON.** Pilot-symbol-aided channel estimation in time and frequency. *Proceedings IEEE GLORECOM,* April 1997, vol. 3, 90-96
- **F. SANZI.** Kanalschatzverfahren für Mobilfunksysteme mit Mehrträgermodulation OFDM. *Ph.D. thesis,* 2003
- **F. SANZI.** Kanalschatzverfahren für Mobilfunksysteme mit Mehrtragermodulation OFDM. *Ph.D. thesis,* 2003
- **S. KAISER.** Multi-Carrier CDMA Mobile Radio Systems - Analysis and Optimization of Detection. *Ph.D. thesis,* 1998
- **F. SANZI ; S. TEN BRINK.** *Iterative channel estimation and decoding with product codes in multi-carrier systems,* 2000, 1338-1344
- **A. HAIMOVICH ; Y. BAR-NESS ; R. MANZO.** A stochastic gradient-based de-correlation algorithm with applications to multi-carrier CDMA. *IEEE 45th Vehicular Technology Conference,* 1995, vol. 1, 464-468
- **F. SANZI.** Kanalschätzverfahren für Mobilfunksysteme mit Mehrträgermodulation OFDM. *Ph.D. thesis,* 2003
- **F. SANZI.** Kanalschätzverfahren für Mobilfunksysteme mit Mehrtragermodulation OFDM. *Ph.D. thesis,* 2003
- **A. BURRY ; J. EGLE ; J. LINDNER.** Diversity comparison of spreading transforms for multi-carrier spread spectrum transmission. *IEEE Trans. Commun,* May 2003, vol. 51 (5), 774-781